# EUROPÄISCHE PATENTSCHRIFT

(11) **EP 3 101 637 B1**
(45) Veröffentlichungstag und Bekanntmachung des Hinweises auf die Patenterteilung: **15.07.2020**
(21) Anmeldenummer: 15179054.0
(22) Anmeldetag: 30.07.2015
(51) Int. Cl.: G08C 17/02, G08C 23/04

(54) **VERFAHREN ZUR KOPPLUNG EINER FERNBEDIENUNG UND EINEM ELEKTRONISCHEN GERÄT**
METHOD FOR COUPLING A REMOTE CONTROLLER AND AN ELECTRONIC DEVICE
PROCÉDÉ DE COUPLAGE D'UNE TÉLÉCOMMANDE ET APPAREIL ÉLECTRONIQUE

(30) Priorität: 02.06.2015 DE 102015108746
(43) Veröffentlichungstag der Anmeldung: 07.12.2016
(73) Patentinhaber: fm marketing gmbh, 5202 Neumarkt am Wallersee (AT)
(72) Erfinder: Maier, Ferdinand, 5202 Neumarkt am Wallersee (AT); Mirlacher, Thomas, 5020 Salzburg (AT)
(74) Vertreter: von Bülow & Tamada

(56) Entgegenhaltungen:
- EP-A1- 2 262 227
- WO-A1-2012/070036
- US-A1- 2003 139 177
- US-A1- 2005 088 275
- US-A1- 2014 267 934

## Beschreibung

Die vorliegende Erfindung betrifft ein Verfahren zur Kopplung einer Fernbedienung mit einem elektronischen Gerät, eine Steuervorrichtung zur Durchführung des Verfahrens, eine Fernbedienung mit der Steuervorrichtung und ein Computerprogrammprodukt.

Aus der EP 1 981 012 A2 und der EP 2 597 865 A1 sind Fernbedienungen mit einem Infrarot-Sender und einem Funk-Transceiver zum Steuern eines elektronischen Gerätes mittels Steuerbefehlen bekannt. Bevor jedoch mit der Fernbedienung per Funk Steuerbefehle an das elektronische Gerät übertragen werden können, wird die Fernbedienung mit dem elektronischen Gerät gekoppelt, was auch unter dem Begriff Pairen bekannt ist. Hierunter versteht man im Allgemeinen die eindeutige Verbindung zweier Funkteilnehmer, mit der sich die Fernbedienung am elektronischen Steuergerät anmeldet. Das elektronische Gerät registriert die Fernbedienung und lässt den Empfang von Steuerbefehlen über den Funkkanal der Fernbedienung zu. Das Koppeln wird dabei mit einem definierten Steuerbefehl gestartet, der beispielsweise über eine bestimmte Taste oder Tastenkombination auf der Fernbedienung ausgelöst wird.

Aus der EP 2 262 227 A1 und der US 2003/139177 A1 ist ein Verfahren gemäß dem Oberbegriff des geltenden Anspruchs 1 bekannt.

Die US 2014 / 0267934 A1 offenbart ein Verfahren zum Versenden einer Anfrage zum Koppeln eines elektronischen Gerätes und einer Fernbedienung mit einer Eingbeschnittstelle zur Eingabe eines Steuerbefehls zum Steuern des elektronischen Gerätes auf einem Funkkanal, wobei die Fernbedienung eingerichtet ist, über den Funkkanal oder einen Infrarotkanal das elektronische Gerät zu steuern, umfassend die Schritte Empfangen des Steuerbefehls gemeinsam mit der Anfrage zum Koppeln von der Eingabeschnittstelle und Versenden des Steuerbefehls gemeinsam mit der Anfrage zum Koppeln über den Infrarotkanal.

Die Druckschrift WO 2012 / 07 00 36 A1 offenbart eine Vorrichtung zur Durchführung eines Kopplungsprozesses, umfassend eine Zentraleinheit mit einer ersten Kurzstreckenverbindungsschnittstelles, die eingerichtet ist in einem Schlüsselempfangsmodus einen eindeutigen Schlüssel zur Kopplung zu empfangen und wenigstens eine Peripherieeinheit mit einer zweiten Kurzstreckenverbindungseinrichtung, die eingerichtet ist, einen eindeutigen Schlüssel zum Koppeln an die Zentraleinheit zu versenden. Die US 2005 /0088275 A1 offenbart ein Verfahren zum Koppeln eines als Befehlsempfänger fungierenden bidirektionalen Objektes mit einem als Befehlssender fungierenden bidirektionalen Objektes, umfassend die Schritte (a) temporäres Zuordnen wenigstens eines als Befehlsempfänger fungierenden Objektes zu einem als Befehlssender fungierenden Objektes; (b) Auswählen eines als Befehlsempfänger wirkenden bidirektionalen Objektes als Befehlsempfänger aus den temporär zugeordneten Objekten und (c) Koppeln des ausgewählten Objektes.

Die mit der vorliegenden Erfindung zu lösende Aufgabe kann somit darin gesehen werden, ein Kopplungsverfahren zu schaffen, dass während der normalen Verwendung der Fernbedienung im Hintergrund abläuft, ohne dass der Benutzer wissen muss, welche Taste zu drücken ist.

Die Aufgabe wird durch die Merkmale der unabhängigen Ansprüche gelöst. Bevorzugte Weiterbildungen sind Gegenstand der abhängigen Ansprüche. Gemäß einem Aspekt der Erfindung, umfasst ein Verfahren zum Versenden einer Anfrage zur Kopplung eines elektronischen Gerätes und einer Fernbedienung, mit einer Eingabeschnittstelle zur Eingabe eines Steuerbefehls zum Steuern des elektronischen Geräts auf einem Funkkanal, wobei die Fernbedienung eingerichtet ist, über den Funkkanal oder einen Infrarotkanal das elektronische Gerät zu steuern, die Schritte Empfangen oder Versenden des Steuerbefehls von der Eingabeschnittstelle, und Versenden des Steuerbefehls gemeinsam mit der Anfrage zum Koppeln über den Infrarotkanal.

Dem angegebenen Verfahren liegt die Überlegung zugrunde, dass der Schritt des Koppelns durch den Benutzer grundsätzlich erst erlernt werden muss. Das heißt, der Benutzer muss, bevor er ein Gerät bedienen kann, in der Bedienungsanleitung erst nachschlagen welchen Befehl er eingeben muss und diesen dann auf der Fernbedienung suchen. Das kann, je nach Funktionsumfang und Umfang der Bedienungsanleitung der Fernbedienung, unterschiedlich zeitaufwändig werden.

Hier greift das angegebene Verfahren mit dem Vorschlag an, die Anfrage zum Koppeln nicht als eigenen Steuerbefehl zu behandeln, sondern die Anfrage zum Koppeln mit einem beliebigen anderen Steuerbefehl zum Steuern des elektronischen Gerätes gemeinsam über den Infrarot-Kanal zu übertragen. Das angegebene Verfahren hat somit den Vorteil, dass wenn der Benutzer das elektronische Gerät über den Infrarot-Kanal steuert, die Fernbedienung mit den Steuerbefehlen, für den Benutzer unsichtbar, eine Kopplungs-Anfrage an das zu steuernde elektronische Gerät aussendet und die Kopplung somit vor dem Benutzer verborgen werden kann.

In einer Weiterbildung des angegebenen Verfahrens wird der Steuerbefehl, gemeinsam mit der Anfrage zum Koppeln, über den Infrarotkanal gesendet, wenn die Fernbedienung nicht mit dem elektronischen Gerät über den Funkkanal verbunden ist, wobei der Steuerbefehl anderenfalls allein über den Funkkanal versendet wird. Das heißt, dass sobald die Kopplung abgeschlossen ist, die Übermittlung der Steuerbefehle ausschließlich auf dem Funkkanal erfolgt. Der Benutzer bekommt vom gesamten Prozess des Koppelns nichts mit, das Koppeln ist für ihn daher transparent. Unter dem Begriff transparent soll nachstehend verstanden werden, dass der Prozess des Koppelns für den Benutzer im Hintergrund ausgelöst und durchgeführt wird, und dieser den Prozess des Koppelns somit nicht wahrnimmt. Auf diese Weise können die Vorteile einer Infrarot-Übertragung von Steuerbefehlen hinsichtlich einer einfachen Bedienung des zu steuernden Gerätes und die Vorteile einer Funk-Übertragung hinsichtlich eines geringen Energieverbrauches und einer Steuermöglichkeit auch dann, wenn sich das zu steuernde Gerät außer Sichtweite befindet, miteinander gekoppelt werden.

Um dem Benutzer dennoch eine Information über den Kopplungszustand zu geben, beispielsweise zu Wartungszwecken, kann eine Information auf der Fernbedienung in Abhängigkeit davon ausgegeben werden, ob der Steuerbefehl über den Infrarotkanal oder den Funkkanal gesendet wird. Auf diese Weise ist für den Benutzer unmittelbar ersichtlich, ob die Fernbedienung mit dem elektronischen Gerät gekoppelt ist, oder nicht, denn im nicht gekoppelten Zustand überträgt die Fernbedienung die Steuerbefehle (beispielsweise beim Drücken einer Taste auf der Eingabeschnittstelle) per Infrarot und im gekoppelten Zustand per Funk.

In einer anderen Weiterbildung des angegebenen Verfahrens kann die Anfrage zum Koppeln vom Steuerbefehl abhängig sein. Auf diese Weise kann das Koppeln in Abhängigkeit verschiedener Szenarien durchgeführt werden.

Hierbei kann die vom Steuerbefehl abhängige Anfrage zum Koppeln ein Aufwachbefehl für das elektronische Gerät sein, wenn der Steuerbefehl ein Einschaltbefehl für das elektronische Gerät ist. Das heißt, dass wenn das zu steuernde elektronische Gerät in einem Ruhezustand ist und mit einem EinschaltBefehl aufgeweckt wird, dann sieht die Koppel-Anfrage anders aus, als wenn das zu steuernde elektronische Gerät völlig neu mit der Fernbedienung gekoppelt werden muss. Auch diese technische Angelegenheit bleibt dem eigentlichen Benutzer verborgen, denn er steuert das zu steuernde elektronische Gerät einfach solange per Infrarot, solange keine Funkverbindung aufgebaut ist.

Die vom Steuerbefehl abhängige Anfrage zum Koppeln kann in allen Fällen eine Identifikationsinformation enthalten, welche die Fernbedienung auf dem Funkkanal eindeutig kennzeichnet. Mit dieser Identifikationsinformation kennzeichnet sich die Fernbedienung auf dem Funkkanal eindeutig, so dass es nach dem übersenden der Identifikationsinformation keines weiteren Infrarot-Kontaktes zwischen beiden Kommunikationspartnern bedarf, um die Kopplung abzuschließen.

Die Identifikationsinformation kann dabei eine beliebige Information sein, welche die Fernbedienung so eindeutig wie möglich identifiziert. Eine Möglichkeit wäre hierbei, sie als zeitliche Information auszubilden, die angibt, wann das elektronische Gerät seinen Funk-Transceiver einschalten soll, um von der Fernbedienung auf dem Funkkanal zum Abschluss des Koppelns weitere Informationen zu empfangen. Alternativ oder zusätzlich kann die Identifikationsinformation auch eine logische Information, wie beispielsweise eine eindeutige Nummer sein, mit der sich die Fernbedienung auf dem Funkkanal eindeutig identifiziert.

Gemäß einem weiteren Aspekt der Erfindung ist eine Steuervorrichtung eingerichtet, eines der angegebenen Verfahren durchzuführen.

In einer Weiterbildung der angegebenen Vorrichtung weist die angegebene Vorrichtung einen Speicher und einen Prozessor auf. Dabei ist eines der angegebenen Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem elektronischen Gerät oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem weiteren Aspekt der Erfindung umfasst eine Fernbedienung eine Eingabeschnittstelle zur Eingabe eines Steuerbefehls, einen Funk-Transceiver über den der eingegebene Steuerbefehl an ein elektronisches Gerät auf einem Funk-Kanal versendbar ist, einen Infrarot-Sender über den der eingegebene Steuerbefehl an das elektronische Gerät auf einem Infrarot-Kanal versendbar ist, und eine der angegebenen Steuervorrichtungen zum Versenden einer Anfrage zum Koppeln des elektronischen Gerätes und der Fernbedienung auf dem Funkkanal.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
- Fig. 1: eine Prinzipdarstellung eines Systems aus zwei elektronischen Geräten und einer Fernbedienung,
- Fig. 2: ein Ablaufdiagramm für ein in der Fernbedienung nach Fig. 1 ausführbares Verfahren,
- Fig. 3: ein Ablaufdiagramm für das Verfahren in Fig. 2 in einem ersten Szenario,
- Fig. 4: ein Ablaufdiagramm für das Verfahren in Fig. 2 in einem zweiten Szenario,
- Fig. 5: ein Ablaufdiagramm für das Verfahren in Fig. 2 in einem dritten Szenario, und
- Fig. 6: ein Ablaufdiagramm für das Verfahren in Fig. 2 in einem vierten Szenario.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

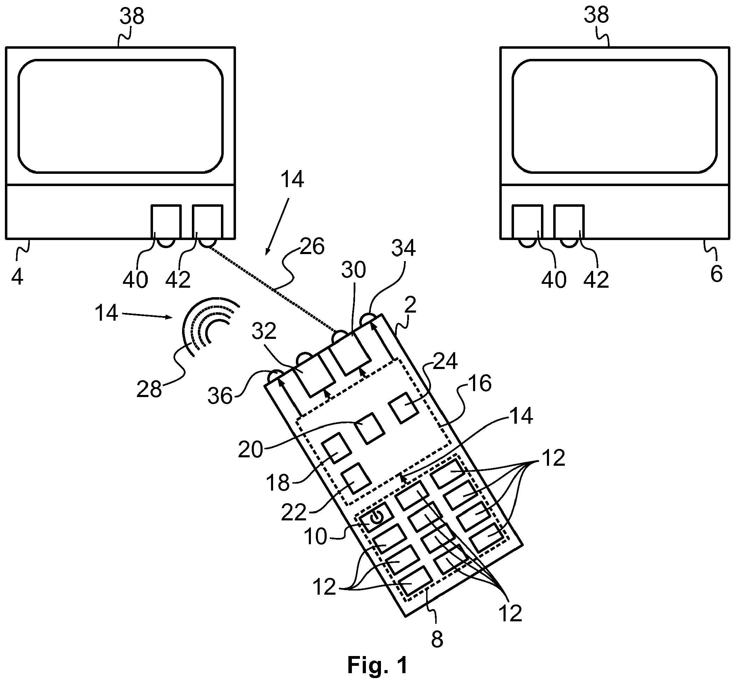

Es wird auf Fig. 1 Bezug genommen, die eine Fernbedienung 2 zum Steuern eines ersten elektronischen Gerätes 4 oder eines zweiten elektronischen Gerätes 6 zeigt.

Die Fernbedienung 2 umfasst eine als Tastatur 8 ausgeführte Eingabeschnittstelle mit mehreren Tasten 10, 12, über die verschiedene Funktionen an den zu steuernden elektronischen Geräten 4, 6 ausgelöst werden sollen. Eine dieser Tasten 10, 12 ist eine Standby-Taste 10. Ihre auszulösende Funktion soll das zu steuernde elektronische Gerät 4, 6 in einen Ruhemodus versetzen und/oder das zu steuernde elektronische Gerät 4, 6 aus dem Ruhemodus aufwecken. Über die anderen Tasten 12 können andere Funktionen an den elektronischen Geräten 4, 6 ausgelöst werden, auf die es zum Verständnis der vorliegenden Ausführung nicht weiter ankommt.

Jede auszulösende Funktion wird in Form eines Steuerbefehls 14 an eine Steuervorrichtung 16, auch Signalverarbeitungseinrichtung genannt, übergeben. Die Steuervorrichtung 16 umfasst einen Speicher 18, in dem ein oder mehrere Computerprogramme hinterlegt sind, sowie einen oder mehrere kommunizierende Prozessoren 20, welche das oder die Computerprogramme aus dem Speicher 18 abrufen und ausführen. Die Steuervorrichtung 16 kann weiter eine Kommunikationsschnittstelle 22 besitzen, um das oder die Computerprogramme im Speicher 18 zu aktualisieren und/oder zu installieren. Schließlich umfasst die Steuervorrichtung 16 noch wenigstens einen Modulationsschaltkreis 24, mit dem die dem Steuerbefehl 14 entsprechende Daten auf ein geeignetes Trägersignal 26, 28 moduliert und an das zu steuernde Gerät 4, 6 übertragen werden können. Der Aufbau derartiger Modulationsschaltkreise 24 ist einschlägig bekannt und soll nachstehend nicht weiter erläutert werden.

Als Trägersignal 26, 28 steht in der vorliegenden Ausführung ein nachstehend IR-Signal 26 genanntes Infrarot-Signal und ein Funksignal 28 zur Verfügung. Als Funksignal kann dabei speziell ein sogenanntes Bluetooth-Low-Energy-Signal zum Einsatz kommen, das gegenüber dem IR-Signal 26 mit einem deutlich geringeren Energieverbrauch erzeugt werden kann, und auch dann an das zu steuernde Gerät 4, 6 übertragen werden kann, wenn sich zwischen dem zu steuernden Gerät 4, 6 und der Fernbedienung Objekte, wie beispielsweise Möbel befinden. Es kann aber auch jede andere Art an Funksignal 28 verwendet werden. Auch müssen das IR-Signal 26 und das Funksignal 28 nicht in einem gemeinsamen Modulationsschaltkreis 24 erzeugt werden. Es kann für jede Signalform ein eigener Modulationsschaltkreis bereitgestellt werden.

Das IR-Signal 26 wird vom Modulationsschaltkreis 24 angesteuert und von einem IR-Sender 30 genannten Infrarot-Sender ausgesendet. Zur Realisierung der vorliegenden Ausführung ist es anders als in den Druckschriften EP 1 981 012 A2 und EP 2 597 865 A1 nicht notwendig, dass der IR-Sender 30 auch IR-Signale 26 empfangen kann. Es ist aber auch möglich, die IR-Verbindung analog zu den vorgenannten Druckschriften bidirektional auszuführen.

Das Funksignal 28 wird, ebenfalls angesteuert vom Modulationsschaltkreis 24, von einem Funk-Transceiver 32 ausgesendet. Der Funk-Transceiver 32 sollte bidirektional ausgeführt sein. Ist jedoch eine bidirektionale Kommunikation über das IR-Signal 26 möglich, dann lässt sich die Erfindung grundsätzlich auch mit einer unidirektionalen Funkverbindung realisieren.

Ferner kann die Fernbedienung 2 noch IR-Leuchtmittel 34 und Funksignal-Leuchtmittel 36 zum entsprechenden Anzeigen, ob der Steuerbefehl 14 auf dem IR-Signal 26 und/oder auf dem Funksignal 28 aufmoduliert übertragen wurde, enthalten.

Die beiden zu steuernden elektronischen Geräte 4, 6 können jeweils als so genannte Set-Top-Boxen ausgeführt sein, die jeweils an einen Bildschirm 38 angeschlossen sind. Eine Set-Top-Box ist ein elektronisches Gerät aus der Unterhaltungselektronik welches Multi-Media-Inhalte an den entsprechenden Bildschirm 38 bereitstellt. Aufgabe der Fernbedienung 2 kann es in diesem Fall sein, mit dem Steuerbefehl 14 die Wiedergabe des elektronischen Gerätes 4, 6 zu steuern, um beispielsweise zwischen TV-Programmen zu wechseln.

Hierzu müssen das jeweilige elektronische Gerät 4, 6 das IR-Signal 26 und das Funksignal 28 empfangen können, wofür jedes elektronische Gerät 4, 6 entsprechend einen Infrarot-Empfänger 42, IR-Empfänger 42 genannt, und einen Funk-Transceiver 40 besitzt. Wird ein Steuerbefehl 14 in dem IR-Signal 26 oder dem Funksignal 28 empfangen, so kann der Steuerbefehl 14 in an sich bekannter Weise aus dem entsprechenden Trägersignal 26, 28 gefiltert und verarbeitet werden, worauf der Kürze halber nicht weiter eingegangen werden soll.

Bevor jedoch ein Steuerbefehl 14 in einem Funksignal 28 gezielt an die elektronischen Geräte 4 oder 6 übertragen werden kann, muss die Fernbedienung 2 mit dem entsprechenden elektronischen Gerät 4 oder 6 gekoppelt werden. Im mit einem der elektronischen Geräte 4, 6 gekoppelten Zustand besitzt die Fernbedienung 2 alle notwendigen Informationen, um ein Funksignal 28 zu generieren und darin an das entsprechende elektronische Gerät 4 oder 6 dediziert Daten, wie den Steuerbefehl 14, zu versenden.

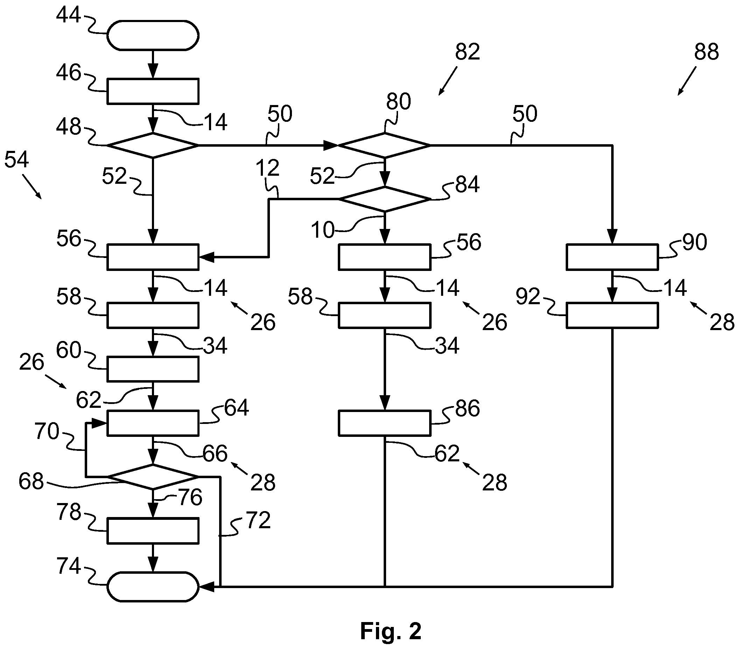

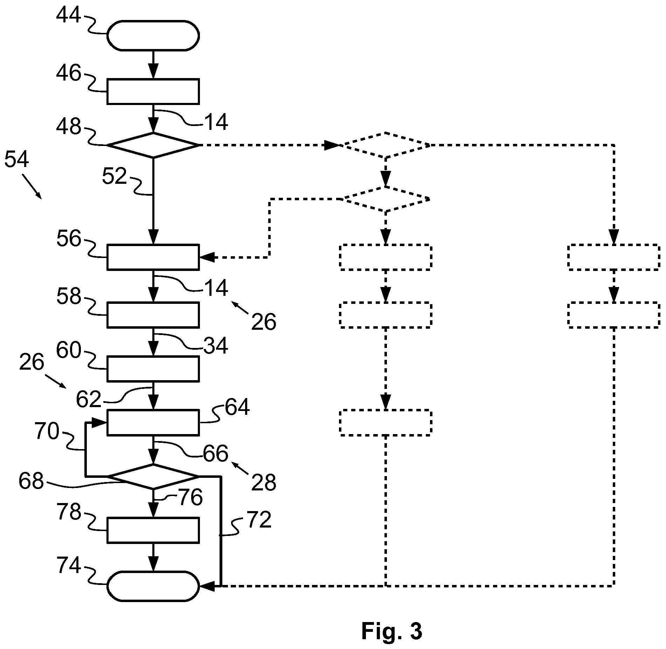

Ein Verfahren zur Kopplung wird nachstehend zunächst anhand von Fig. 2 vollständig beschrieben, bevor anhand der Fig. 3 bis 6 verschiedene Szenarien für den Verfahrensablauf ausgeführt werden. Dieses Verfahren wird in der vorliegenden Ausführung durch den Prozessor 20 der Steuervorrichtung 16 ausgeführt.

Nach dem Start in Schritt 44, empfängt der Prozessor 20 in einem Empfangsschritt 46 einen Steuerbefehl 14 über eine der Tasten 10, 12. Daraufhin entscheidet der Prozessor 20, ob der Steuerbefehl 14 über ein IR-Signal 26 oder ein Funksignal 28 an eines der elektronischen Geräte 4, 6 gesendet werden soll. Hierzu entscheidet der Prozessor 20 zunächst in einem Gekoppelt-Entscheidungsschritt 48, ob die Fernbedienung 2 mit einem der elektronischen Geräte 4, 6 bereits gekoppelt ist. Der Gekoppelt-Entscheidungsschritt 48 kann durch den Prozessor 20 mit einer Ja-Entscheidung 50 oder mit einer Nein-Entscheidung 52 abgeschlossen werden.

Im Falle einer Nein-Entscheidung 52, das heißt, die Fernbedienung 2 ist mit keinem der beiden elektronischen Geräte 4, 6 gekoppelt, führt der Prozessor 20 ein Verfahren gemäß einem in Fig. 2 gezeigten Kopplungsstrang 54 aus. Der Kopplunsstrang 54 umfasst einen Infrarot-Sendeschritt 56, in dem der Prozessor 20 den Modulationsschaltkreis 24 ansteuert, um den Steuerbefehl 14 auf das IR-Signal 26 aufzumodulieren und an eines der elektronischen Geräte 4, 6 zu übertragen. In an sich bekannter Weise empfängt das elektronische Gerät 4, 6 dann das IR-Signal 26, auf das die Fernbedienung 2 ausgerichtet ist, und kann den Steuerbefehl 14 entsprechend verarbeiten.

Anschließend kann der Prozessor 20 optional mit einem IR-Anzeigescshrift 58 das IR-Leuchtmittel 34 ansteuern, um dem Benutzer anzuzeigen, dass zum Senden des Steuerbefehls 14 das IR-Signal 26 verwendet wird und dass der Benutzer gegebenenfalls die Fernbedienung 2 auf das entsprechende elektronische Gerät 4, 6 ausrichten muss.

Schließlich generiert der Prozessor 20 in einem IR-Anfrageschritt 60 eine Koppel-Anfrage 62 und steuert die Modulationsschaltung 24 derart an, dass die Koppel-Anfrage 62 in dem IR-Signal 26 gemeinsam mit dem Steuerbefehl 14 an das entsprechende elektronische Gerät 4, 6 übertragen wird. Auf diese Weise wird das Koppeln der Fernbedienung 2 mit dem elektronischen Gerät 4, 6 ausgelöst, auf das der Benutzer die Fernbedienung 2 ausgerichtet hat. Der Prozessor 20 benötigt zum Auslösen des Koppelns vom Benutzer keinerlei spezielle Eingaben. Das Drücken einer beliebigen Taste 10, 12 während des gewöhnlichen Betriebs des elektronischen Gerätes 4, 6 reicht aus. Das Koppeln zwischen der Fernbedien2 und dem elektronischen Gerät 4, 6 ist für den Benutzer somit transparent.

Der Prozessor 20 kann die Koppel-Anfrage 62 dabei mit einem Koppel-Code und/oder einer Identifikationsinformation der Kommunikationsschnittstelle 22 der Fernbedienung 2 generieren. Alternativ oder zusätzlich kann der Prozessor 20 die Koppel-Anfrage 62 mit einer Aufforderung an das entsprechende elektronische Gerät 4, 6 generieren, innerhalb des nächsten Zeitraumes auf ein Funksignal 28 mit weiteren Informationen zum Koppeln zu warten.

Ferner soll unter einer gemeinsamen Übertragung eine unmittelbar aufeinanderfolgende Übertragung des Steuerbefehls 14 und der Koppel-Anfrage 62 verstanden werden. Es ist dabei nicht zwingend notwendig, dass der Steuerbefehl 14 und die Kopplungs-Anfrage 62 in einem gemeinsamen IR-Signal 26 übertragen werden.

Nach dem Senden der Koppel-Anfrage 62 generiert der Prozessor 20 als nächstes in einem Funksignal-Anfrageschritt 64 eine Funk-Verbindungssanfrage 66 und steuert die Modulationsschaltung 24 derart an, dass die Funk-Verbindungsanfrage 66 über den Funkkanal 28 ausgesendet wird. Die Funk-Verbindungsanfrage 66 kann nun jedes in der Nähe befindliche elektronische Gerät 4, 6 grundsätzlich empfangen. Die Funk-Verbindungsanfrage 66 kann jedoch nur das elektronische Gerät 4, 6 auswerten, und somit darauf reagieren, das zuvor die Koppel-Anfrage 62 mit dem Koppel-Code und der Aufforderung, den Funk-Transceiver 40 einzuschalten, empfangen hat. Da der Benutzer beim Senden der Koppel-Anfrage 62 mit dem IR-Signal 26 die Fernbedienung 2 auf ein bestimmtes elektronisches Gerät 4, 6 richtet, ist automatisch sichergestellt, dass auch die Koppel-Anfrage 62 am zu koppelnden elektronischen Gerät 4, 6 ankommt, ohne dass der Benutzer in den Kopplungsprozess mit irgendwelchem Hintergrundwissen programmtechnisch eingreifen muss.

Nach der Funk-Verbindungsanfrage 66 wartet der Prozessor 20 dann in einem Warte-Entscheidungsschritt 68 auf eine Reaktion des elektronischen Gerätes 4, 6 an das die Funk-Verbindungsanfrage 66 gerichtet ist. Der Prozessor 20 kann auf den Warte-Entscheidungsschritt 68 hin entweder nach einem bestimmten Zeitablauf 70 zum Funksignal-Anfrageschritt 64 zurückkehren, nach einer vorbestimmten Fehlversuchsanzahl 72 zu einem Programmende 74 springen oder, wenn eine Funk-Antwort 76 vom entsprechenden elektronischen Gerät 4, 6 empfangen wurde, in einem Kopplungs-Abschluss-Schritt 78 alle notwendigen Informationen zum Kommunizieren mit dem nun gekoppelten elektronischen Gerät 4, 6 über den Funkkanal 28 abspeichern und dann ebenfalls zum Programmende 74 springen.

Damit ist der Kopplungsstrang 54 abgeschlossen.

Alternativ zum Eintritt in den Kopplungsstrang 54 kann der Prozessor 20 im Gekoppelt-Entscheidungsschritt 48 mit einer Ja-Entscheidung 50 entscheiden, dass die Fernbedienung 2 bereits mit einem der elektronischen Geräte 4, 6 gekoppelt ist. In diesem Fall prüft der Prozessor 20 in einem Verbunden-Entscheidungsschritt 80, ob die Fernbedienung 2 mit dem elektronischen Gerät 4, 6, mit dem sie gekoppelt ist, auch verbunden ist.

Wenn dies nicht der Fall ist, der Prozessor 20 den Verbunden-Entscheidungsschritt 80 also mit einer Nein-Entscheidung 52 quittiert, dann führt der Prozessor 20 einen Verbindungsaufbau-Strang 82 aus. Dort prüft der Prozessor 20 zunächst in einem Standby-Prüfschritt 84, ob der Steuerbefehl 14 aus dem Empfangsschritt 46 über die Standby-Taste 10 oder eine andere Taste 12 eingegeben wurde. Hat der Benutzer eine andere Taste 12 und nicht die Standby-Taste 10 gedrückt, führt der Prozessor 20 den Kopplungsstrang 54 aus.

Anderenfalls, wenn der Benutzer die Standby-Taste 10 gedrückt hat, dann führt der Prozessor 20 zunächst einen zum Kopplungsstrang 54 analogen Infrarot-Sendeschritt 56 und IR-Anzeigeschritt 58 aus. Danach generiert der Prozessor 20 in einem Aufweckschritt 86 einen Weckbefehl auf Grundlage dessen das mit der Fernbedienung 2 gekoppelte elektronische Gerät 4, 6 seinen Funk-Transceiver 40 aktiviert. Anschließend steuert der Prozessor 20 die Modulationsschaltung 24 derart an, dass der Weckbefehl an das gekoppelte elektronische Gerät 4, 6 übertragen wird.

Mit dem Senden des Weckbefehls ist der Verbindungsaufbau-Strang 82 abgeschlossen.

Alternativ zum Eintritt in den Verbindungsaufbau-Strang 82 kann der Prozessor 20 im Verbunden-Entscheidungsschritt 80 mit einer Ja-Entscheidung 50 auf eine bestehende Funk-Verbindung zum gekoppelten elektronischen Gerät 4, 6 entscheiden. In diesem Fall führt der Prozessor einen Funksendestrang 88 aus.

Im Funksendestrang 88 steuert der Prozessor 20 in einem Funk-Sendeschritt 90 die Modulationsschaltung 24 an und sendet den Steuerbefehl 14 mit einem Funk-signal 28 an das elektronische Gerät 4, 6, das mit der Fernbedienung 2 gekoppelt und verbunden ist. Durch Ansteuern des Funk-Signal-Leuchtmittels 36 in einem Funk-Anzeigeschritt 92 zeigt der Prozessor 20 dem Benutzer das Versenden des Steuerbefehls 14 im Funksignal 28 an. Damit wird der Verbindungsaufbau-Strang 82 abgeschlossen.

Nachstehend werden praktische Szenarios des vom Prozessor 20 ausgeführten Verfahrens der Fig. 2 anhand der Fig. 3 bis 6 näher erläutert. Hierbei sind in Fig. 3 bis 6 alle Schritte des Verfahrens aus Fig. 2, die in einem bestimmten Szenario nicht durchlaufen werden, gestrichelt dargestellt.

Zunächst soll für ein in Fig. 3 gezeigtes Szenario angenommen werden, dass die Fernbedienung 2 mit keinem der beiden elektronischen Geräte 4, 6 gekoppelt ist und mit dem ersten elektronischen Gerät 4 gekoppelt wird, auf das die Fernbedienung 2 ausgerichtet ist.

Nachdem der Benutzer einen Steuerbefehl 14 mit einer der Tasten 10, 12 eingegeben hat, wird der Steuerbefehl 14 mit dem IR-Signal 26 an das erste elektronische Gerät 4 übertragen. Gemeinsam mit dem Steuerbefehl 14 wird dann die Koppel-Anfrage 62 mit dem IR-Signal 26 versendet und die Fernbedienung 2 mit dem ersten elektronischen Gerät 4 gekoppelt.

Der Benutzer hat damit das erste elektronische Gerät 4 eingeschaltet, wobei die Kopplung im Hintergrund abgelaufen ist. Sollte die Kopplung unmittelbar beim Einschalten des esten elektronischen Geräts 4 nicht möglich sein, dann erfolgt die Kopplung beim Senden des nächsten oder übernächsten Steuerbefehls 14, wenn beispielsweise ein Programmwechsel erfolgt.

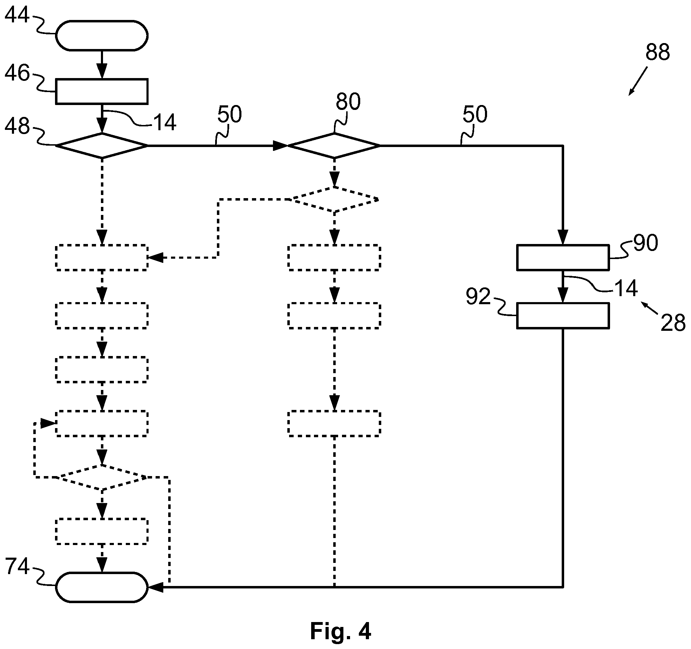

Im Szenario von Fig. 4 soll davon ausgegangen werden, dass die Fernbedienung 2 mit dem ersten elektronischen Gerät 4 gekoppelt und verbunden ist.

Nachdem der Benutzer den Steuerbefehl 14 eingegeben hat, entscheidet der Prozessor 20 der Fernbedienung 2 in den Entscheidungsschritten 48, 80, dass die Fernbedienung 2 mit dem ersten elektronischen Gerät 4 gekoppelt und verbunden ist. Dann wird der Steuerbefehl 14 im Funksendestrang 88 mit dem Funksignal 28 an das erste elektronische Gerät 4 gesendet.

Die Auswahl des Funksignals 28 zum Senden des Steuerbefehls 14 erfolgt automatisch durch den Prozessor 20, ohne dass der Benutzer mit irgendeiner Eingabe eingreifen muss.

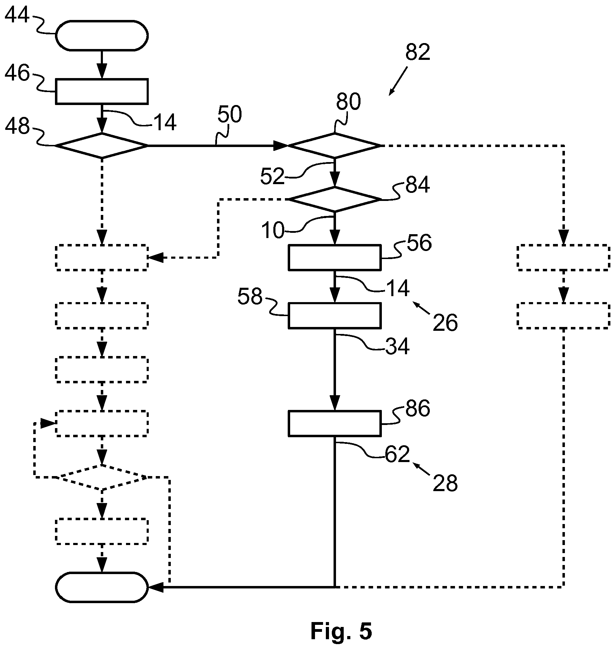

Im Szenario von Fig. 5 soll davon ausgegangen werden, dass die Fernbedienung 2 mit dem ersten elektronischen Gerät 4 gekoppelt, aber nicht verbunden ist.

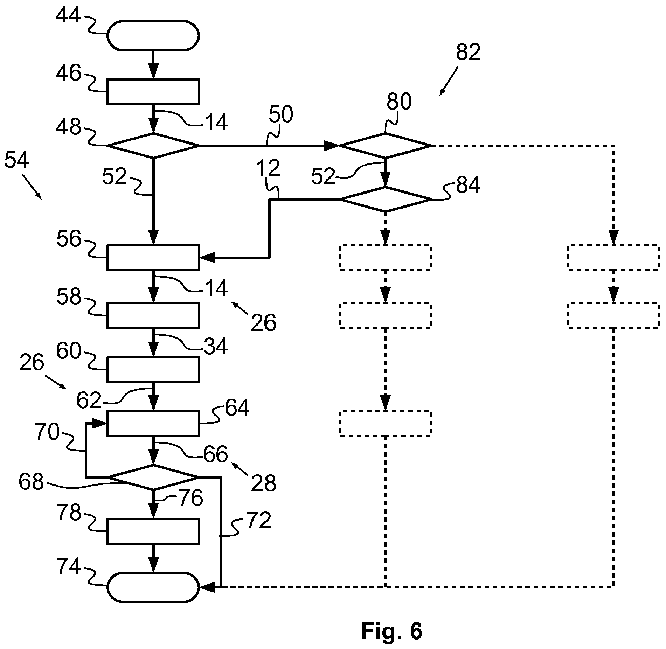

Ein derartiger Fall kann dann auftreten, wenn sich das erste elektronische Gerät 4 in einem Ruhemodus befindet. Dieser Gedanke wird im Standby-Prüfschritt 84 ausgenutzt, um zwischen einem vom Benutzer gewünschten Weckbefehl für das erste elektronische Gerätes 4 und einem vom Benutzer gewünschten neuen Koppeln des ersten elektronischen Gerätes 4 zu unterscheiden, wenn beispielsweise die Fernbedienung 2 bereits mit dem zweiten elektronischen Gerät 6 verbunden ist. Auf dieses alternative Szenario wird später anhand von Fig. 6 näher eingegangen.

Befindet sich das erste elektronische Gerät 4 in einem Standby-Modus und soll geweckt werden, dann drückt der Benutzer die Standby-Taste 10. Der Prozessor 20 erkennt die gedrückte Standby-Taste 10 im Standby-Prüfschritt 84 und weckt das erste elektronische Gerät 4 über das IR-Signal 26 und seinen Funk-Transceiver 40 über den Weckbefehl auf.

Auch in diesem Szenario steuert der Benutzer lediglich die Funktion des ersten elektronischen Gerätes 4. Zum Aufwecken seines Funk-Transceivers 40 muss der Benutzer nicht aktiv eingreifen.

Abschließend soll ein Szenario basierend auf einer Zusammenschau von Fig. 5 und Fig. 6 beschrieben werden. Hierfür soll davon ausgegangen werden, dass die Fernbedienung 2 mit dem zweiten elektronischen Gerät 6 gekoppelt und verbunden ist, der Benutzer jedoch das erste elektronische Gerät 4 mit der Fernbedienung 2 koppeln möchte. An dieser Stelle ist die einzige Handlungsauflage, die dem Benutzer zum Umkoppeln vom zweiten elektronischen Gerät 6 auf das erste elektronische Gerät 4 gemacht werden muss, dass sich das zweite elektronische Gerät 6 in einem Standby-Modus befindet, so dass der Verbunden-Entscheidungsschritt 80 mit einer Nein-Entscheidung 52 zum Standby-Entscheidungsschritt 84 führt.

Richtet der Benutzer die mit dem zweiten elektronischen Gerät 6 gekoppelte Fernbedienung 2 auf das erste elektronische Gerät 4 (welches sich zum Beispiel in einem anderen Raum befindet) und schaltet dieses durch Drücken der Standby-Taste 10 ein, so durchläuft der Prozessor 20 zunächst den in Fig. 5 gezeigten Verfahrensablauf. Hierbei wird zwar das Versenden des Standby-Steuerbefehls 14 im Infrarot-Sendeschritt 56 das erste elektronische Gerät 4 selbst aufwecken, der Weckbefehl aus Aufweckschritt 86 wird jedoch wirkungslos bleiben, da das erste elektronische Gerät 4 in diesem Szenario nicht mit der Fernbedienung 2 gekoppelt ist und somit kein Funksignal 28 von der Fernbedienung 2 empfangen kann.

Sobald der Benutzer jedoch eine andere Taste 12 als die Standby-Taste 10 drückt, kehrt der Prozessor 20 in diesem Szenario zum Standby-Entscheidungsschritt 84 zurück. In diesem Fall wird der Prozessor 20 jedoch das Verfahren mit dem Kopplungsstrang 54 fortsetzen und das erste elektronische Gerät 4 mit der Fernbedienung 2 koppeln.

Somit ist dem Benutzer zum transparenten Koppeln nur eine einzige Auflage zu machen. Er muss beim Umkoppeln von einem bereits gekoppelten elektronischen Gerät 6 auf ein anderes elektronisches Gerät 4 das bereits gekoppelte elektronische Gerät 6 in einen Ruhemodus versetzen. Weitere interaktive Eingriffe durch den Benutzer sind nicht erforderlich. Auch im vierten Szenario nach Fig. 6 in Kombination mit Fig. 5 läuft die Kopplung für den Benutzer transparent im Hintergrund ab.

Damit der Benutzer sehen kann, ob er die Fernbedienung 2 noch auf das zu koppelnde elektronische Gerät 4 ausrichten muss oder nicht, sind das IR-Leuchtmittel 34 und das Funk-Leuchtmittel 36 vorhanden. Solange das IR-Leuchtmittel 34 beim Drücken einer der Tasten 10, 12 leuchtet, muss der Benutzer die Fernbedienung 2 auf das zu koppelnde elektronische Gerät 4, 6 bei der Bedienung des elektronischen Geräts 6 ausrichten.

## Patentansprüche

1. Verfahren zum Versenden einer Anfrage (62, 66) zum Koppeln eines elektronischen Gerätes (4, 6) und einer Fernbedienung (2) mit einer Eingabeschnittstelle (10, 12) zur Eingabe eines Steuerbefehls (14) zum Steuern des elektronischen Gerätes (4, 6) auf einem Funkkanal (28), wobei die Fernbedienung (2) eingerichtet ist, über den Funkkanal (28) oder einen Infrarotkanal (26) das elektronische Gerät (4, 6) zu steuern, umfassend:
- Empfangen des Steuerbefehls (14) von der Eingabeschnittstelle (10, 12),
- Generieren der Anfrage (62, 66) zum Koppeln, und
- Versenden des empfangenen Steuerbefehls (14) gemeinsam mit der generierten Anfrage (62, 66) zum Koppeln über den Infrarotkanal (26), wobei
- der Steuerbefehl (14) gemeinsam mit der Anfrage (62, 66) zum Koppeln über den Infrarotkanal (26) gesendet wird, wenn die Fernbedienung (2) nicht mit dem elektronischen Gerät (4, 6) über den Funkkanal (28) verbunden ist und wobei der Steuerbefehl (14) anderenfalls allein über den Funkkanal (28) versendet wird.

2. Verfahren nach Anspruch 1, umfassend Ausgeben einer Information (34, 36) auf der Fernbedienung (2) in Abhängigkeit davon, ob der Steuerbefehl (14) über den Infrarotkanal (26) oder den Funkkanal (28) gesendet wird.

3. Verfahren nach einem der vorstehenden Ansprüche, wobei die Anfrage (62, 66) zum Koppeln vom Steuerbefehl (14) abhängig (84) ist.

4. Verfahren nach Anspruch 3, wobei die vom Steuerbefehl (14) abhängige (84) Anfrage (62, 66) zum Koppeln ein Aufwachbefehl für das elektronische Gerät (4, 6) ist, wenn der Steuerbefehl (14) ein Einschaltbefehl für das elektronische Gerät (4, 6) ist.

5. Verfahren nach Anspruch 4, wobei die vom Steuerbefehl (14) abhängige (84) Anfrage (62, 66) zum Koppeln in allen anderen Fällen eine Identifikationsinformation enthält, welche die Fernbedienung (2) auf dem Funkkanal (28) kennzeichnet.

6. Verfahren nach Anspruch 5, wobei die Identifikationsinformation eine zeitliche Information, wann die Fernbedienung (2) auf dem Funkkanal (28) sendet, und/oder eine logische Information, mit der sich die Fernbedienung (2) auf dem Funkkanal (28) identifiziert, umfasst.

7. Steuervorrichtung (20), die eingerichtet ist, ein Verfahren nach einem der vorstehenden Ansprüche durchzuführen.

8. Fernbedienung (2), umfassend:
- eine Eingabeschnittstelle (10, 12) zur Eingabe eines Steuerbefehls (14),
- einen Funk-Transceiver (32) über den der eingegebene Steuerbefehls (14) an ein elektronisches Gerät (4, 6) auf einem Funkkanal (28) versendbar ist,
- einen Infrarot-Sender (30) über den der eingegebene Steuerbefehl (14) an das elektronische Gerät (4, 6) auf einem Infrarot-Kanal (26) versendbar ist, und
- eine Steuervorrichtung (20) nach Anspruch 7 zum Versenden einer Anfrage (62, 66) zum Koppeln des elektronischen Gerätes (4, 6) und der Fernbedienung (2) auf dem Infrarot-Kanal (26).

9. Computerprogramm umfassend Programmcodemittel, um alle Schritte eines Verfahrens nach einem der Ansprüche 1 bis 6 durchzuführen, wenn das Computerprogramm auf der Steuervorrichtung (20) nach Anspruch 7 ausgeführt wird.

## Claims

1. Method for sending a request (62, 66) for coupling an electronic device (4, 6) and a remote control (2) with an input interface (10, 12) for inputting a control command (14) for controlling the electronic device (4, 6) on a radio channel (28), wherein the remote control (2) is arranged to control the electronic device (4, 6) via the radio channel (28) or an infrared channel (26), comprising:
- receiving the control command (14) from the input interface (10, 12),
- generating the request (62, 66) for coupling, and
- Transmission of the received control command (14) together with the generated request (62, 66) for coupling via the infrared channel (26), wherein
- the control command (14) is transmitted together with the request (62, 66) for coupling via the infrared channel (26) if the remote control (2) is not connected to the electronic device (4, 6) via the radio channel (28) and wherein the control command (14) is otherwise transmitted solely via the radio channel (28).

2. Method according to claim 1, comprising outputting information (34, 36) on the remote control (2) depending on whether the control command (14) is sent via the infrared channel (26) or the radio channel (28).

3. Method according to one of the above claims, wherein the request (62, 66) for coupling is dependent (84) on the control command (14).

4. Method according to claim 3, wherein the request (62, 66) for coupling dependent (84) on the control command (14) is a wake-up command for the electronic device (4, 6) when the control command (14) is a power-on command for the electronic device (4, 6).

5. Method according to claim 4, wherein the request (62, 66) for coupling dependent (84) on the control command (14) contains identification information which identifies the remote control (2) on the radio channel (28) in all other cases.

6. Method according to claim 5, wherein the identification information comprises a time information when the remote control (2) transmits on the radio channel (28) and/or a logical information with which the remote control (2) identifies itself on the radio channel (28).

7. Control device (20) adapted to perform a procedure according to any of the above claims.

8. Remote control device (2) comprising:
- an input interface (10, 12) for inputting a control command (14),
- a radio transceiver (32) via which the control command (14) entered can be sent to an electronic device (4, 6) on a radio channel (28),
- an infrared transmitter (30) via which the control command (14) entered can be sent to the electronic device (4, 6) on an infrared channel (26), and
- a control device (20) according to claim 7 for sending a request (62, 66) for coupling the electronic device (4, 6) and the remote control (2) on the infrared channel (26).

9. Computer program comprising program code means for performing all steps of a method according to any one of claims 1 to 6 when the computer program is executed on the control device (20) according to claim 7.

## Revendications

1. Procédé pour envoyer une demande (62, 66) pour coupler un dispositif électronique (4, 6) et une télécommande (2) avec une interface d'entrée (10, 12) pour entrer une instruction de commande (14) pour commander le dispositif électronique (4, 6) sur un canal radio (28), dans lequel la télécommande (2) est agencée pour commander le dispositif électronique (4, 6) via le canal radio (28) ou un canal infrarouge (26), comprenant :
- recevoir la commande de contrôle (14) de l'interface d'entrée (10, 12),
- la génération de la demande (62, 66) de couplage, et
- Transmission de la commande de contrôle reçue (14) avec la demande de couplage générée (62, 66) via le canal infrarouge (26),
où
- l'ordre de commande (14) est transmis avec la demande (62, 66) de couplage par le canal infrarouge (26) si la télécommande (2) n'est pas reliée à l'appareil électronique (4, 6) par le canal radio (28) et dans lequel l'ordre de commande (14) est sinon transmis uniquement par le canal radio (28).

2. Procédé selon la revendication 1, comprenant la sortie d'informations (34, 36) sur la télécommande (2) selon que la commande de contrôle (14) est envoyée via le canal infrarouge (26) ou le canal radio (28).

3. Procédé selon l'une des revendications ci-dessus, dans laquelle la demande (62, 66) de couplage dépend (84) de la commande de contrôle (14).

4. Procédé selon la revendication 3, dans lequel la demande (62, 66) de couplage dépendant (84) de la commande de contrôle (14) est une commande de réveil pour le dispositif électronique (4, 6) lorsque la commande de contrôle (14) est une commande de mise en marche pour le dispositif électronique (4, 6).

5. Procédé selon la revendication 4, dans lequel la demande (62, 66) de couplage dépendant (84) de la commande de contrôle (14) contient des informations d'identification qui identifient la télécommande (2) sur le canal radio (28) dans tous les autres cas.

6. Procédé selon la revendication 5, dans lequel l'information d'identification comprend une information temporelle lorsque la télécommande (2) transmet sur le canal radio (28) et/ou une information logique avec laquelle la télécommande (2) s'identifie sur le canal radio (28).

7. Dispositif de contrôle (20) adapté pour effectuer une procédure selon l'une des revendications ci-dessus.

8. dispositif de commande à distance (2) comprenant :
- une interface d'entrée (10, 12) pour la saisie d'une commande de contrôle (14),
- un émetteur-récepteur radio (32) par lequel la commande de contrôle (14) saisie peut être envoyée à un dispositif électronique (4, 6) sur un canal radio (28),
- un émetteur infrarouge (30) par lequel la commande de contrôle (14) saisie peut être envoyée à l'appareil électronique (4, 6) sur un canal infrarouge (26), et
- un dispositif de contrôle (20) selon la revendication 7 pour envoyer une demande (62, 66) de couplage du dispositif électronique (4, 6) et de la télécommande (2) sur le canal infrarouge (26).

9. Programme informatique comprenant des moyens de code de programme pour exécuter toutes les étapes d'une procédé selon l'une quelconque des revendications 1 à 6 lorsque le programme informatique est exécuté sur le dispositif de contrôle (20) selon la revendication 7.
